# EUROPÄISCHE PATENTSCHRIFT

(11) **EP 3 189 905 B1**
(45) Veröffentlichungstag und Bekanntmachung des Hinweises auf die Patenterteilung: **28.04.2021**
(21) Anmeldenummer: 16202598.5
(22) Anmeldetag: 07.12.2016
(51) Int. Cl.: B08B 7/02, B24C 1/00, B24C 7/00, B08B 7/00, B24C 1/08, B25J 11/00

(54) **VERFAHREN ZUR LACKIERUNG VON KFZ-KUNSTSTOFFBAUTEILEN UND REINIGUNGSVORRICHTUNG**
METHOD FOR THE COATING OF MOTOR VEHICLE COMPONENTS AND CLEANING DEVICE
PROCÉDÉ DE MISE EN PEINTURE DE COMPOSANTS EN MATIÈRE PLASTIQUE DE VÉHICULE AUTOMOBILE ET DISPOSITIF DE NETTOYAGE

(30) Priorität: 08.01.2016 DE 102016100243
(43) Veröffentlichungstag der Anmeldung: 12.07.2017
(73) Patentinhaber: REHAU AG + Co, 95111 Rehau (DE)
(72) Erfinder: Vogl, Heinz, 94256 Drachselsried (DE); Früchtl, Erwin, 94253 Bischofsmais (DE); Schreiner, Sabrina, 93485 Rimbach (DE)

(56) Entgegenhaltungen:
- WO-A1-90/14927
- WO-A1-2013/149713
- DE-A1-102007 027 618

## Beschreibung

Die Erfindung betrifft ein Verfahren zur Lackierung von Kfz-Kunststoffbauteilen, insbesondere Kfz-Stoßfängern, mit den Merkmalen des Oberbegriffs des Patentanspruchs 1. Die Erfindung betrifft ebenfalls eine Reinigungsvorrichtung gemäß dem Oberbegriff des Anspruchs 8. Ein Verfahren mit den Merkmalen des Oberbegriffs des Patentanspruchs 1 und eine Reinigungsvorrichtung mit den Merkmalen des Oberbegriffs des Patentanspruchs 8 sind aus der WO 2013/149713 bekannt.

Bei Kfz-Kunststoffbauteilen, insbesondere Kfz-Stoßfängern aus Kunststoff, werden an die Qualität der Lackierung sehr hohe Anforderungen gestellt. Auch bei widrigen äußeren Bedingungen (Hitze, Feuchtigkeit, Schnee, Streusalzeinwirkung etc.) muss das lackierte Kunststoff-Bauteil über viele Jahre hinweg sein ursprüngliches Aussehen beibehalten und darüber hinaus auch bis zu einem gewissen Grad mechanischen Einwirkungen standhalten können. Dies setzt voraus, dass die Lackschicht auf dem Kfz-Kunststoffbauteil sehr gut haftet. Um dies sicherzustellen, ist eine sorgfältige Reinigung des Bauteils unmittelbar vor der Lackierung zwingend erforderlich. Hierzu können beispielsweise wässrige Mehrzonen-Waschanlagen eingesetzt werden. Diese haben jedoch einen großen Platzbedarf und erfordern darüber hinaus ein relativ aufwendiges Management zur Wiederaufbereitung der großen hierfür benötigen Wassermengen. In jüngerer Zeit hat sich daher als Alternative die Reinigung mit Kohlendioxid, insbesondere in Form von Schnee oder Pellets etabliert, welche eine wesentlich platzsparendere Reinigung der Kunststoff-Bauteile ermöglicht. Darüber hinaus ist bei diesem Verfahren keine aufwendige Wiederaufbereitung des Reinigungsmittels erforderlich, da das Kohlendioxid nach dessen Anwendung rückstandsfrei verdampft. Die Reinigungswirkung des Kohlendioxids beruht hierbei u.a. auf dessen abrasiver Wirkung gegenüber dem zu reinigenden Kunststoff-Bauteil. Ein Verfahren zur Reinigung von Kfz-Stoßfängern mit CO₂ vor deren Lackierung ist beispielsweise aus der DE 10 2007 027 618 A1 bekannt.

Um die zuvor beschriebene gründliche Reinigung des Kunststoff-Bauteils dauerhaft sicherzustellen, muss der einwandfreie Funktionszustand der Reinigungsvorrichtung zur Applikation des Kohlendioxids regelmäßig überprüft werden. Diese Überprüfung des Funktionszustandes erfolgt beispielsweise manuell. Hierbei haben sich zwei unterschiedliche Verfahrensweisen etabliert: Zum einen wird mittels der Reinigungsvorrichtung ein Spritzbild auf einen Block aus Kunststoffmaterial appliziert, um die Kohlendioxidverteilung der Reinigungsvorrichtung zu überprüfen. Diese Überprüfung erfolgt mittels einer visuellen Begutachtung des Spritzbildes, welches sich auf dem Kunststoffblock abzeichnet. Nachteilig ist hierbei, dass sich unterschiedliche Qualitäten des Kunststoffblocks unmittelbar auf das Testergebnis auswirken. Unterschiedliche Oberflächenhärten des Materials zeigen unterschiedliche Strukturen des Applikationsergebnisses. Alternativ hierzu kann auch ein Waagentest durchgeführt werden. Hierbei wird mittels der Reinigungsvorrichtung mit festgelegten Parametern Kohlendioxid auf eine handelsübliche Waage appliziert und hierbei die Strahlkraft des Kohlendioxids gemessen. Nachteilig bei den manuellen Verfahren ist insgesamt, dass hierfür ein hoher zeitlicher Aufwand erforderlich ist. Daher können die vorbeschriebenen manuellen Tests nicht während, sondern nur vor oder nach Produktionsläufen durchgeführt werden.

Aus der WO 2013/149713 ist es bekannt, die Düsen einer CO₂-Reinigungsvorrichtung für Kfz-Bauteile in vorgegebenen Zeitabständen aus einer Reinigungsposition in eine Prüfposition zu verfahren, in der die Düsen einen Testkörper mit CO₂ beaufschlagen. Die Auswertung der Beaufschlagung des Testkörpers mit CO₂ erfolgt dann automatisch und hierüber ein Rückschluss auf den Funktionszustand der Reinigungsvorrichtung. Insgesamt bleibt durch diesen Prüfvorgang die automatisierte Reinigung der den Reinigungsbereich kontinuierlich durchlaufenden Kfz-Kunststoffbauteile zumindest im Wesentlich unbeeinträchtigt. Dieses Verfahren hat sich in der Praxis bewährt, erfordert aber die Bereitstellung eines entsprechenden Testkörpers sowie eine hieran angeschlossene automatisierte Testauswertung. Ferner können Störungen erst mit einer gewissen Zeitverzögerung im nächsten Prüfzyklus identifiziert werden.

Vor diesem Hintergrund liegt der Erfindung die Aufgabe zugrunde, ein Verfahren mit den eingangs beschriebenen Merkmalen anzugeben, welches eine mit geringem Aufwand verbundene, engmaschige Überprüfung der Ausstoßmenge an CO₂ ermöglicht. Erfindungsgemäß wird diese Aufgabe durch die Merkmale des Patentanspruchs 1 gelöst. Es erfolgt also eine Drucküberwachung im Endbereich der Prozessleitung vor dem Übergang zur Düse und damit eine Überwachung des Strömungszustandes in der Nähe des CO₂-Applikationsbereiches. Erfindungsgemäß kann somit auch eine Fehlfunktion des Prozessventils erfasst werden, da eine solche Fehlfunktion einen unmittelbaren Einfluss auf den Druckzustand in der Prozessleitung zwischen Prozessventil und Düse hat. Das Prozessventil ist zweckmäßigerweise als Zweipunkt-Schaltventil ausgebildet, welches lediglich zwei Positionen einnimmt und während der CO₂-Applikation vollständig geöffnet ist (= Öffnungsposition), während es im Ruhezustand der Reinigungsvorrichtung die Prozessleitung verschließt (= Schließposition). Das Prozessventil kann als Magnetventil ausgebildet sein.

Zweckmäßigerweise ist das Druckmessgerät als Druckschalter ausgebildet, welcher bei Überschreitung und / oder Unterschreitung eines eingestellten Druck-Grenzwertes schaltet. So kann beispielsweise eine Störungsmeldung erfolgen, sofern das Druckmessgerät nach Öffnung des zugeordneten Prozessventils nicht innerhalb eines Totzeit-Grenzwertes t_{A} einen entsprechenden Druckanstieg in der Prozessleitung meldet. Dieser Totzeit-Grenzwert t_{A} wird zweckmäßigerweise dem bei Reinigungsbeginn physikalisch bedingten Totzeitverhalten der Prozessleitung entsprechend eingestellt, beispielsweise elektronisch. Der Totzeit-Grenzwert t_{A} berücksichtigt, dass es nach der Öffnung des Prozessventils physikalisch bedingt eine gewisse Zeit braucht, bis sich der einem ordnungsgemäßen Betrieb entsprechende Prozessdruck innerhalb des Prozessleitungsabschnitts einstellt, in dem das Druckmessgerät angeordnet ist. Während des CO₂-Durchflussbetriebes wird der Druck in der Prozessleitung durch das Druckmessgerät kontinuierlich gemessen. Sofern hierbei ein eingestellter oberer Druck-Grenzwert pₘₐₓ überschritten oder ein eingestellter unterer Druck-Grenzwert pₘᵢₙ unterschritten wird (also ein eingestelltes "Druck-Fenster", welches dem ordnungsgemäßen CO₂-Durchflussbetrieb entspricht, verlassen wird), erfolgt ebenfalls eine Störungsmeldung.

Weiterhin erfolgt zweckmäßigerweise eine Störungsmeldung, sofern das Druckmessgerät nach Schließung des zugeordneten Prozessventils nicht innerhalb eines Totzeit-Grenzwertes tz einen entsprechenden Druckabfall in der Prozessleitung meldet. Dieser Totzeit-Grenzwert t_{Z} wird vorzugsweise dem bei Reinigungsende physikalisch bedingten Totzeitverhalten in der Prozessleitung entsprechend eingestellt. Der Totzeit-Grenzwert tz berücksichtigt, dass es nach Schließung des Prozessventils physikalisch bedingt eine gewisse Zeit braucht, bis sich der Druck innnerhalb des Prozessleitungsabschnittes, in dem das Druckmessgerät angeordnet ist, entsprechend abgebaut hat. Dieser Totzeit-Grenzwert tz ist üblicherweise größer als der Totzeit-Grenzwert t_{A} eingestellt, da nach Öffnung des Prozessventils der Druckaufbau im Prozessleitungsabschnitt zwischen Prozessventil und Düse in der Regel schneller erfolgt als der dortige Druckabfall nach Schließung des Prozessventils. So kann es beispielsweise aufgrund des geringen Strömungsquerschnitts in der Düse eine gewisse Zeit dauern, bis sich nach Schließung des Prozessventils der Druck im Abschnitt der Prozessleitung, in dem sich das Druckmessgerät befindet, durch einen restlichen Austritt von CO₂ aus der Düse auch entsprechend abgebaut hat.

Zweckmäßigerweise wird durch die Prozessleitung flüssiges CO₂ transportiert, welches beim Austritt aus der Düse zu CO₂-Schnee gefriert. Dieser Gefriervorgang resultiert aus dem Druckabfall, den das CO₂ nach dem Austritt aus der Düse erfährt. Im Rahmen der Erfindung liegt es ferner, dass die Reinigungsvorrichtung, insbesondere der austrittseitige Endabschnitt der Reinigungsvorrichtung, an einem Roboterarm angeordnet ist. Die Reinigungsvorrichtung weist erfindungsgemäß mehrere, vorzugsweise unterschiedlich ausgerichtete, Düsen zur gleichmäßigen Applikation des CO₂ auf dem Kfz-Kunststoffbauteil auf. Ferner ist erfindungsgemäß jeder Düse ein separates Druckmessgerät zugeordnet. Dies stellt sicher, dass jede einzelne Düse ordnungsgemäß betrieben wird. Üblicherweise sind mehrere aneinander gereihte Düsen in einem Array zusammengefasst, wobei vorzugsweise mehrere Arrays vorgesehen sind.

Im Rahmen der Erfindung liegt es ferner, dass zwischen dem Reinigungsvorgang und dem Lackiervorgang eine Oberflächenaktivierung der Kfz-Kunststoffbauteile erfolgt. Eine solche Oberflächenaktivierung kann beispielsweise mittels IR-Strahlung durchgeführt werden. Durch die Oberflächenaktivierung wird eine besonders gute Haftung des Lackes auf der Oberfläche der Kfz-Kunststoffbauteile ermöglicht.

Gegenstand der Erfindung ist ferner eine Reinigungsvorrichtung zur Durchführung des vorbeschriebenen Verfahrens gemäß Anspruch 8.

Im Folgenden wird die Erfindung anhand einer lediglich ein Ausführungsbeispiel darstellenden Zeichnung ausführlich erläutert. Es zeigen schematisch:
- Fig. 1:: ausschnittsweise eine erfindungsgemäße Reinigungsvorrichtung zur Reinigung von Kfz-Stoßfängern;
- Fig. 2:: einen vergrößerten Ausschnitt der Fig. 1,
- Fig. 2a:: die Ansicht X in Fig. 2 und
- Fig. 3:: einen Schaltplan hinsichtlich der CO₂-Versorgung und Steuerung bzw. Regelung der in den Figuren 1 und 2 dargestellten Reinigungsvorrichtung.

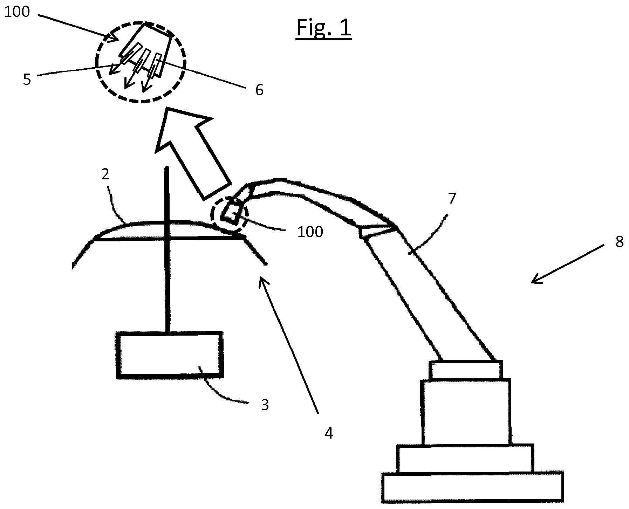

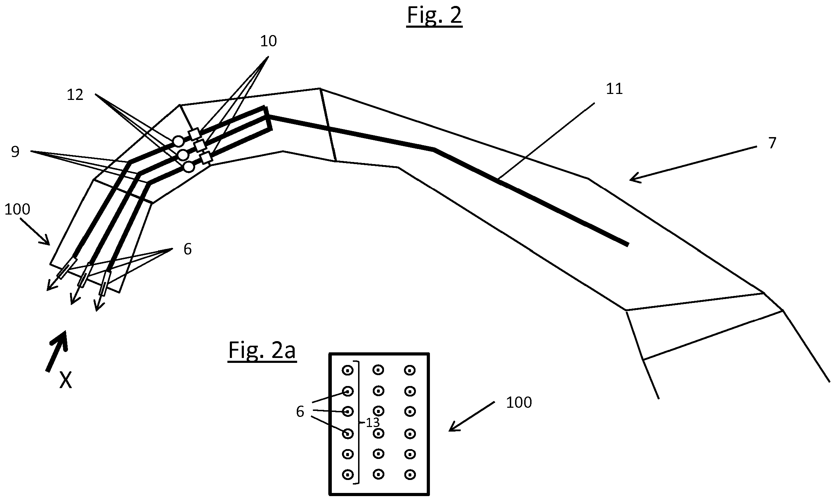

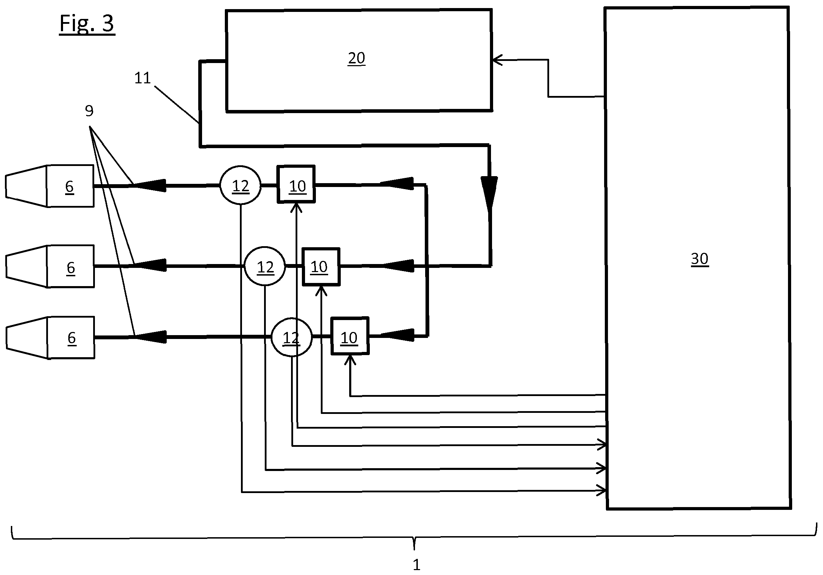

Die Figuren zeigen eine einen Düsenkopf 100 aufweisende Reinigungsvorrichtung 1, welche bei einem Verfahren zur Lackierung von Kfz-Stoßfängern 2 zum Einsatz kommt. Hierbei durchlaufen zur Vorbereitung der Lackierung auf Trägern 3 angeordnete Kfz-Stoßfänger 2 kontinuierlich einen Reinigungsbereich 4 und werden dort mittels der automatisch betriebenen Reinigungsvorrichtung 1 in einem Reinigungsvorgang mit CO₂-Schnee 5 gereinigt. Wie dem vergrößerten Ausschnitt der Fig. 1 sowie der Fig. 2 zu entnehmen ist, weist die Reinigungsvorrichtung 1 hierzu am Düsenkopf 100 mehrere unterschiedlich ausgerichtete Düsen 6 zur gleichmäßigen Applikation des CO₂-Schnees 5 auf den Kfz-Stoßfängern 2 auf. Der austrittseitige Endabschnitt der Reinigungsvorrichtung 1 ist an einem Roboterarm 7 angeordnet, der Bestandteil eines Reinigungsroboters 8 ist. Die Reinigungsvorrichtung 1 weist ferner ein in Fig. 3 dargestelltes Versorgungssystem 20 zur Bereitstellung des CO₂ auf. Nach dem Reinigungsvorgang gelangen die Kfz-Stoßfänger 2 in einen nicht näher dargestellten Lackierbereich und werden dort mittels eines automatisierten Lackiervorgangs mit mindestens einer Lackschicht versehen. Zwischen dem Reinigungsvorgang und dem Lackiervorgang kann optional eine Oberflächenaktivierung der Kfz-Stoßfänger erfolgen, beispielsweise mittels IR-Strahlung (ebenfalls nicht dargestellt).

Wie der Fig. 2 zu entnehmen ist, weist die Reinigungsvorrichtung 1 mehrere Prozessleitungen 9 mit jeweils einer endseitigen Düse 6 zum Ausstoß von CO₂ auf, wobei in jeder Prozessleitung 9 ein Prozessventil 10 vorgesehen ist, mittels dem die Menge des durch die jeweilige Prozessleitung 9 strömenden CO₂ gesteuert wird. Die Prozessventile 10 sind als Zweipunkt-Schaltventile ausgebildet, welche lediglich zwei Positionen einnehmen und während der CO₂-Applikation vollständig geöffnet sind (= Öffnungsposition), während sie im Ruhezustand der Reinigungsvorrichtung 1 die jeweilige Prozessleitung 9 verschließen (= Schließposition). Die Prozessventile 10 sind als Magnetventile ausgebildet. Die Prozessleitungen 9 sind an eine gemeinsame Versorgungsleitung 11 angeschlossen, die mit dem Versorgungssystem 20 verbunden ist (s. Fig. 3).

Wie der Fig. 2 ferner zu entnehmen ist, ist in jeder Prozessleitung 9 zwischen Prozessventil 10 und Düse 6 ein elektronischer Druckschalter 12 vorgesehen, welcher den Prozessdruck in Strömungsrichtung gesehen hinter dem jeweiligen Prozessventil 10 erfasst. Hierdurch ist eine kontinuierliche Überprüfung der Ausstoßmenge an CO₂ in jeder Prozessleitung 9 gewährleistet. Der Druckschalter 12 schaltet bei Überschreitung bzw. Unterschreitung eines eingestellten Druck-Grenzwertes. Sofern nun zwecks Beginn eines Reinigungsvorganges die Prozessventile 10 in den Prozessleitungen 9 geöffnet werden, fließt flüssiges CO₂ durch die Prozessleitungen 9 zu den Düsen 6. Hiermit einher geht ein bei ordnungsgemäßem Betrieb erfolgender entsprechender Druckanstieg in den Prozessleitungen 9. Sofern jedoch nach Öffnung des zugeordneten Prozessventils 10 der jeweilige Druckschalter 12 nicht innerhalb eines elektronisch eingestellten Totzeit-Grenzwertes t_{A} einen entsprechenden Druckanstieg in der betreffenden Prozessleitung 9 meldet, erfolgt eine Störungsmeldung. Eine solche Störung kann beispielsweise dadurch hervorgerufen werden, dass zwar das Prozessventil 10 ordnungsgemäß vom Schaltschrank 30 (Fig. 3) des Reinigungssystems 1 angesteuert wurde, tatsächlich aber dieses als Magnetventil ausgebildete Prozessventil 10 klemmt und somit die gewünschte Öffnungsbewegung nicht vollzogen hat. Der Totzeit-Grenzwert t_{A} berücksichtigt, dass es nach Öffnung des Prozessventils 10 physikalisch bedingt eine gewisse Zeit braucht, bis sich der einem ordnungsgemäßen CO₂-Durchflussbetrieb entsprechende Prozessdruck in der Prozessleitung 9 zwischen Düse 6 und Prozessventil 10 auch aufgebaut hat. Während des CO₂-Durchflussbetriebes wird der Druck in den Prozessleitungen 9 durch die Druckschalter 12 kontinuierlich gemessen. Sofern hierbei ein eingestellter oberer Druck-Grenzwert pₘₐₓ überschritten oder ein eingestellter unterer Druck-Grenzwert pₘᵢₙ unterschritten wird (also ein eingestelltes "Druck-Fenster", welches dem ordnungsgemäßen CO₂-Durchflussbetrieb entspricht, verlassen wird), schaltet der entsprechende Druckschalter 12 und es erfolgt ebenfalls eine Störungsmeldung.

Ferner erfolgt im Ausführungsbeispiel eine Störungsmeldung auch dann, sofern der Druckschalter 12 nach Schließung des zugeordneten Prozessventils 10 nicht innerhalb eines elektronisch eingestellten Totzeit-Grenzwertes tz einen entsprechenden Druckabfall in der Prozessleitung 9 meldet. Eine solche Störung kann beispielsweise dadurch hervorgerufen werden, dass die Prozessleitung 9 im Bereich zwischen Düse 6 und Prozessventil 10 gequetscht ist, wodurch sich der Druckabfall verlangsamt. Diese Quetschung ist jedoch auch ein Grund für einen nicht ordnungsgemäßen Betrieb der Düse 6 und wird daher entsprechend vom System detektiert. Der Totzeit-Grenzwert tz berücksichtigt, dass es nach Schließung des Prozessventils 10 physikalisch bedingt eine gewisse Zeit braucht, bis sich der Prozessdruck in der Prozessleitung 9 zwischen Düse 6 und Prozessventil 10 auch abgebaut hat. Dies hängt mit dem im Vergleich zur Prozessleitung 9 kleinen Strömungsquerschnitt der Düse 6 zusammen, durch den nach Schließung des Prozessventils 10 zunächst restliches CO₂ beim Druckabbau entweichen muss. Im Ausführungsbeispiel ist t_{Z} > t_{A}, da der Druckaufbau in der Prozessleitung 9 schneller erfolgt als der Druckabbau. Die Druckschalter 12 sind in Strömungsrichtung gesehen unmittelbar hinter dem jeweiligen Prozessventil 10 angeordnet (s. Fig. 2).

Im Ausführungsbeispiel wird durch die Prozessleitungen 9, welche an die gemeinsame Versorgungsleitung 11 angeschlossen sind, flüssiges CO₂ transportiert, welches aufgrund des Druckabfalls nach dem Austritt aus den Düsen 6 zu CO₂-Schnee gefriert. Ebenfalls erkennbar ist, dass der die Prozessleitungen 9 sowie die Düsen 6 umfassende austrittseitige Endabschnitt der Reinigungsvorrichtung 1 am Roboterarm 7 angeordnet ist. Es ist ferner insbesondere anhand einer vergleichenden Betrachtung der Fig. 2 und 2a erkennbar, dass der Düsenkopf 100 der Reinigungsvorrichtung 1 mehrere unterschiedlich ausgerichtete Düsen 6 zur gleichmäßigen Applikation des CO₂ auf den Kfz-Stoßfängern 2 aufweist. Sechs hintereinander gereihte Düsen 6 sind in einem Array 13 zusammengefasst, wobei insgesamt drei Arrays 13 vorgesehen sind. Ferner ist erkennbar, dass jeder Düse 6 ein separater Druckschalter 12 zugeordnet ist.

Die Fig. 3 zeigt ein Schaltbild der in den Figuren 1 und 2 ausschnittsweise dargestellten Reinigungsvorrichtung 1. Exemplarisch sind in Fig. 3 drei Düsen 6 abgebildet. Es ist erkennbar, dass diese über die gemeinsame Versorgungsleitung 11, welche sich in die einzelnen Prozessleitungen 9 aufteilt, mit CO₂ versorgt werden. Die Versorgungsleitung 11 ist an die zentrale CO₂-Versorgungseinheit 20 der Reinigungsvorrichtung 1 angeschlossen, welche einen CO₂-Vorratstank, eine Pumpe zur Förderung des CO₂ sowie eine CO₂-Kühleinrichtung umfasst (nicht dargestellt). Die Reinigungsvorrichtung 1 wird mittels des Schaltschrankes 30 elektronisch gesteuert und/oder geregelt. Der Schaltschrank 30 steuert/regelt den Betrieb der CO₂-Versorgungseinheit 20 (Temperatureinstellung, CO₂-Dosierung etc.). Ferner wird über den Schaltschrank 30 auch die Ansteuerung der Prozessventile 10 vorgenommen. Die in Strömungsrichtung gesehen unmittelbar hinter den Prozessventilen 10 angeordneten Druckschalter 12 liefern nun ihrerseits Prozesssignale an den Schaltschrank 30, wobei dieser bei nicht ordnungsgemäß erfolgenden Schaltsignalen Störungsmeldungen -wie vorstehend beschrieben - abgibt. Anhand dieser Störungsmeldungen kann nun eine detaillierte Überprüfung der Reinigungsvorrichtung 1 und damit einhergehend eine Fehlerbehebung erfolgen.

## Patentansprüche

1. Verfahren zur Lackierung von Kfz-Kunststoffbauteilen (2), insbesondere Kfz-Stoßfängern,
- wobei zur Vorbereitung der Lackierung die Kfz-Kunststoffbauteile (2) einen Reinigungsbereich (4) kontinuierlich durchlaufen und dort mittels einer automatisch betriebenen Reinigungsvorrichtung (1) in einem Reinigungsvorgang mit CO₂ gereinigt werden,
- wobei die Reinigungsvorrichtung (1) mindestens eine Prozessleitung (9) mit mindestens einer endseitigen Düse (6) zum Ausstoß von CO₂ aufweist,
- wobei nach dem Reinigungsvorgang die durchlaufenden Kfz-Kunststoffbauteile (2) in einen Lackierbereich gelangen und dort mittels eines automatisierten Lackiervorgangs mit mindestens einer Lackschicht versehen werden und
- wobei die Reinigungsvorrichtung (1) mehrere, vorzugsweise unterschiedlich ausgerichtete, Düsen (6) zur gleichmäßigen Applikation des C0₂ auf dem Kfz-Kunststoffbauteil (2) aufweist,
**dadurch gekennzeichnet,**
- **dass** die Reinigungsvorrichtung (1) mindestens ein in der Prozessleitung (9) angeordnetes Prozessventil (10) aufweist, mittels dem die Menge des durch die Prozessleitung (9) strömenden CO₂ gesteuert wird,
- **dass** die Ausstoßmenge an CO₂ kontinuierlich überprüft wird, indem in der Prozessleitung (9) zwischen Prozessventil (10) und Düse (6) ein, vorzugsweise elektronisches, Druckmessgerät (12) vorgesehen wird, welches den Prozessleitungsdruck in Strömungsrichtung gesehen hinter dem Prozessventil (10) erfasst,
- **dass** jeder Düse (6) ein separates Druckmessgerät (12) zugeordnet ist.

2. Verfahren nach Anspruch 1, **dadurch gekennzeichnet, dass** das Druckmessgerät (12) als Druckschalter ausgebildet ist, welcher bei Überschreitung und/oder Unterschreitung eines eingestellten Druck-Grenzwertes schaltet.

3. Verfahren nach Anspruch 1 oder 2, **dadurch gekennzeichnet, dass** eine Störungsmeldung erfolgt, sofern das Druckmessgerät (12) nach Öffnung des zugeordneten Prozessventils (10) nicht innerhalb eines Totzeit-Grenzwertes (t_{A}) einen entsprechenden Druckanstieg in der Prozessleitung (9) meldet.

4. Verfahren nach einem der Ansprüche 1 bis 3, **dadurch gekennzeichnet, dass** eine Störungsmeldung erfolgt, sofern das Druckmessgerät (12) nach Schließung des zugeordneten Prozessventils (10) nicht innerhalb eines Totzeit-Grenzwertes (tz) einen entsprechenden Druckabfall in der Prozessleitung (9) meldet.

5. Verfahren nach einem der Ansprüche 1 bis 4, **dadurch gekennzeichnet, dass** durch die Prozessleitung (9) flüssiges CO₂ transportiert wird, welches beim Austritt aus der Düse zu CO₂-Schnee (5) gefriert.

6. Verfahren nach einem der Ansprüche 1 bis 5, **dadurch gekennzeichnet, dass** der austrittseitige Endabschnitt der Reinigungsvorrichtung (1) an einem Roboterarm (7) angeordnet ist.

7. Verfahren nach einem der Ansprüche 1 bis 6, **dadurch gekennzeichnet, dass** zwischen dem Reinigungsvorgang und dem Lackiervorgang eine Oberflächenaktivierung der Kfz-Kunststoffbauteile (2) erfolgt.

8. Reinigungsvorrichtung (1) zur Durchführung des Verfahrens nach einem der Ansprüche 1 bis 7,
- wobei die automatisch betreibbare Reinigungsvorrichtung (1) zur Reinigung eines im Reinigungsbereich kontinuierlich durchlaufenden Kfz-Kunststoffbauteils (2) mit CO₂ eingerichtet ist,
- wobei die Reinigungsvorrichtung (1) hierzu mindestens eine Prozessleitung (9) mit mindestens einer endseitigen Düse (6) zum Ausstoß von CO₂ aufweist,
- wobei die Reinigungsvorrichtung (1) mehrere, vorzugsweise unterschiedlich ausgerichtete, Düsen (6) zur gleichmäßigen Applikation des C0₂ auf dem Kfz-Kunststoffbauteil (2) aufweist und
**dadurch gekennzeichnet,**
- **dass** die Reinigungsvorrichtung (1) mindestens ein in der Prozessleitung (9) angeordnetes Prozessventil (10) aufweist, mittels dem die Menge des durch die Prozessleitung (9) strömenden CO₂ steuerbar ist,
- **dass** zur kontinuierlichen Überprüfung der Ausstoßmenge an CO₂ in der Prozessleitung (9) zwischen Prozessventil (10) und Düse (6) ein, vorzugsweise elektronisches, Druckmessgerät (12) vorgesehen ist, welches den Prozessleitungsdruck in Strömungsrichtung gesehen hinter dem Prozessventil (10) erfasst,
- **dass** jeder Düse (6) ein separates Druckmessgerät (12) zugeordnet ist.

## Claims

1. A method of painting automotive plastics parts (2), in particular automotive bumpers,
- wherein in order to prepare for the painting, the automotive plastics parts (2) continuously pass through a cleaning area (4) and are cleaned in said area by CO₂ in a cleaning process by means of an automatically operated cleaning device (1),
- wherein the cleaning device (1) has at least one process line (9) with at least one end-side nozzle (6) for the output of CO₂,
- wherein after the cleaning process the automotive plastic parts (2) passing through enter a painting area and are provided with at least one paint layer in said area by means of an automated painting process, and
- wherein the cleaning device (1) has a plurality of, preferably differently oriented, nozzles (6) for the uniform application of the CO₂ on the automotive plastics part (2),
**characterised in that**
- the cleaning device (1) has at least one process valve (10) arranged in the process line (9), by means of which the quantity of the CO₂ flowing through the process line (9) is controlled,
- the output quantity of CO₂ is continuously monitored **in that**, in the process line (9), between process valve (10) and nozzle (6), a preferably electronic pressure measuring instrument (12) is provided, which measures the process line pressure downstream of the process valve (10) as seen in the direction of flow, and
- a separate pressure measuring instrument (12) is allocated to each nozzle (6).

2. The method according to claim 1, **characterised in that** the pressure measuring instrument (12) is in the form of a pressure switch, which switches when pressure goes above and/or below a set limit value.

3. The method according to claim 1 or 2, **characterised in that** a fault report occurs unless the pressure measuring instrument (12) reports an appropriate pressure rise in the process line (9) within a dead time limit (t_{A}) after the allocated process valve (10) is opened.

4. The method according to one of claims 1 to 3, **characterised in that** a fault report occurs unless the pressure measuring instrument (12) reports an appropriate pressure drop in the process line (9) within a dead time limit (tz) after the allocated process valve (10) is closed.

5. The method according to one of claims 1 to 4, **characterised in that** liquid CO₂ is transported through the process line (9), said liquid CO₂ freezing to form CO₂ snow (5) on exiting the nozzle.

6. The method according to one of claims 1 to 5, **characterised in that** the exit-side end portion of the cleaning device (1) is arranged on a robot arm (7).

7. The method according to one of claims 1 to 6, **characterised in that** a surface activation of the automotive plastics parts (2) takes place between the cleaning process and the painting process.

8. A cleaning device (1) for carrying out the method according to one of claims 1 to 7,
- wherein the automatically operatable cleaning device (1) is equipped with CO₂ for cleaning an automotive plastics parts (2) continuously passing through the cleaning area,
- wherein to this end the cleaning device (1) has at least one process line (9) with at least one end-side nozzle (6) for the output of CO₂,
- wherein the cleaning device (1) has a plurality of, preferably differently oriented, nozzles (6) for the uniform application of the CO₂ on the automotive plastics part (2) and
**characterised in that**
- the cleaning device (1) has at least one process valve (10) arranged in the process line (9), by means of which the quantity of the CO₂ flowing through the process line (9) is controllable,
- for the continuous monitoring of the output quantity of CO₂, in the process line (9) between process valve (10) and nozzle (6) a preferably electric pressure measuring instrument (12) is provided, which measures the process line pressure downstream of the process valve (10) as seen in the direction of flow,
- a separate pressure measuring instrument (12) is allocated to each nozzle (6).

## Revendications

1. Procédé de mise en peinture de composants en matière plastique (2) de véhicule automobile, en particulier de pare-chocs de véhicule automobile,
- dans lequel, pour la préparation de la mise en peinture, les composants en matière plastique (2) de véhicule automobile circulent en continu à travers une zone de nettoyage (4) et y sont nettoyés au moyen d'un dispositif de nettoyage (1) à fonctionnement automatique dans un processus de nettoyage au CO₂,
- dans lequel le dispositif de nettoyage (1) comporte au moins un conduit de processus (9) doté d'au moins une buse (6) côté extrémité pour émettre du CO₂,
- dans lequel, après le processus de nettoyage, les composants en matière plastique (2) de véhicule automobile en circulation arrivent dans une zone de mise en peinture et y sont pourvus d'au moins une couche de peinture au moyen d'un processus de mise en peinture automatisé et
- dans lequel le dispositif de nettoyage (1) comporte plusieurs buses (6), de préférence orientées différemment, pour l'application homogène du CO₂ sur le composant en matière plastique (2) de véhicule automobile,
**caractérisé en ce que**
- le dispositif de nettoyage (1) comporte au moins une soupape de processus (10) disposée dans le conduit de processus (9), au moyen de laquelle la quantité du CO₂ s'écoulant dans le conduit de processus (9) est commandée,
- la quantité d'émission de CO₂ est vérifiée en continu, un manomètre (12), de préférence électronique, étant prévu dans le conduit de processus (9) entre la soupape de processus (10) et la buse (6), ledit manomètre détectant la pression du conduit de processus derrière la soupape de processus (10), vu dans la direction d'écoulement, et
- un manomètre (12) séparé est associé à chaque buse (6).

2. Procédé selon la revendication 1, **caractérisé en ce que** le manomètre (12) est réalisé sous la forme d'un interrupteur manométrique, qui commute lorsque la pression passe au-dessus et/ou au-dessous d'une valeur limite de pression réglée.

3. Procédé selon la revendication 1 ou 2, **caractérisé en ce qu'**une signalisation de défaut se produit si, après l'ouverture de la soupape de processus (10) associée, le manomètre (12) ne signale pas pendant une valeur limite de temps mort (t_{A}) une augmentation de pression correspondante dans le conduit de processus (9).

4. Procédé selon l'une des revendications 1 à 3, **caractérisé en ce qu'**une signalisation de défaut se produit si, après la fermeture de la soupape de processus (10) associée, le manomètre (12) ne signale pas pendant une valeur limite de temps mort (tz) une diminution de pression correspondante dans le conduit de processus (9).

5. Procédé selon l'une des revendications 1 à 4, **caractérisé en ce que** du CO₂ liquide est transporté par le conduit de processus (9), qui gèle en neige carbonique (5) en sortant de la buse.

6. Procédé selon l'une des revendications 1 à 5, **caractérisé en ce que** la partie d'extrémité côté sortie du dispositif de nettoyage (1) est disposé sur un bras de robot (7).

7. Procédé selon l'une des revendications 1 à 6, **caractérisé en ce qu'**une activation de la surface des composants en matière plastique (2) de véhicule automobile est effectuée entre le processus de nettoyage et le processus de mise en peinture.

8. Dispositif de nettoyage (1) destiné à exécuter le procédé selon l'une des revendications 1 à 7,
- dans lequel le dispositif de nettoyage (1) pouvant fonctionner automatiquement est configuré pour le nettoyage au CO₂ d'un composant en matière plastique (2) de véhicule automobile circulant en continu à travers la zone de nettoyage,
- dans lequel le dispositif de nettoyage (1) comporte à cet effet au moins un conduit de processus (9) doté d'au moins une buse (6) côté extrémité pour émettre du CO₂,
- dans lequel le dispositif de nettoyage (1) comporte plusieurs buses (6), de préférence orientées différemment, pour l'application homogène du CO₂ sur le composant en matière plastique (2) de véhicule automobile et
**caractérisé en ce que**
- le dispositif de nettoyage (1) comporte au moins une soupape de processus (10) disposée dans le conduit de processus (9), au moyen de laquelle la quantité du CO₂ s'écoulant dans le conduit de processus (9) peut être commandée,
- pour la vérification en continu de la quantité d'émission de CO₂, un manomètre (12), de préférence électronique, est prévu dans le conduit de processus (9) entre la soupape de processus (10) et la buse (6), ledit manomètre détectant la pression du conduit de processus derrière la soupape de processus (10), vu dans la direction d'écoulement, et
- un manomètre (12) séparé est associé à chaque buse (6).
